# EUROPÄISCHE PATENTSCHRIFT

(11) **EP 4 194 734 B1**
(45) Veröffentlichungstag und Bekanntmachung des Hinweises auf die Patenterteilung: **22.10.2025**
(21) Anmeldenummer: 22212036.2
(22) Anmeldetag: 07.12.2022
(51) Int. Cl.: F16L 37/088, F16L 21/05

(54) **VERBINDUNGSELEMENT**
CONNECTING ELEMENT
ELÉMENT DE LIAISON

(30) Priorität: 08.12.2021 DE 102021132343
(43) Veröffentlichungstag der Anmeldung: 14.06.2023
(73) Patentinhaber: HDT Veritas Hessen GmbH, 63571 Gelnhausen (DE)
(72) Erfinder: HATTASS, Dirk, 63584 Gründau (DE); GEESMANN, Urs, 63571 Gelnhausen (DE)
(74) Vertreter: Patentship Patentanwaltsgesellschaft mbH

(56) Entgegenhaltungen:
- EP-A1- 3 460 308
- EP-A1- 3 913 272
- US-A1- 2006 145 475
- US-A1- 2014 209 074
- US-A1- 2019 178 429

## Beschreibung

Die vorliegende Erfindung betrifft ein Verbindungselement zum Herstellen einer Fluidverbindung mit zwei Fluidleitungen, sowie eine Fluidverbindungsanordnung umfassend ein Verbindungselement und eine erste und zweite Fluidleitung.

In einem herkömmlichen Fahrzeug wird eine Vielzahl von Fluidleitungen, wie z.B. Fluidschläuche, benötigt, um unterschiedliche Arten von Fluid zu leiten. Insbesondere wird in mit Wasserstoff-betriebenen Fahrzeugen Wasserstoff, Luft und Kühlwasser zu einer Brennstoffzelle des Fahrzeugs durch als Wasserstoff-, Luft- oder Kühlwasserleitungen ausgebildete Fluidleitungen geführt. Aufgrund des räumlich begrenzten Bauraums eines Fahrzeuges werden entsprechende Fluidleitungen, insbesondere Wasserstoff-, Luft- oder Kühlwasserleitungen, oftmals in engen Biegeradien geführt und werden miteinander durch Verbindungselemente verbunden, welche eine fluiddichte Verbindung zwischen den verbundenen Fluidleitungen sicherstellen.

Insbesondere bei der Leitung von Wasserstoff, Luft und Kühlwasser zu einer Brennstoffzelle, ergibt sich oftmals das Problem der Ionenauswaschung bei herkömmlich verwendeten Kunststoffen, wie z.B. Polyamid 66, Polyamid 11 oder Polyamid 12. Durch die entsprechende nachteilige lonenauswaschung bei fluidführenden Systemen bestehend aus den genannten herkömmlich verwendeten Kunststoffen erhöht sich beispielsweise die Ionenkonzentration des entsprechend durchgeführten Kühlwassers, wodurch sich die Leitfähigkeit des Kühlwassers erhöht, was unter Umständen zu Kurzschlüssen in der Brennstoffzelle führen kann, bzw. es können Ionen durch in dem Wasserstoff oder in der Luft vorhandenes Kondenswasser ausgewaschen und zu der Brennstoffzelle mitgeführt werden, wodurch die Funktion der Brennstoffzelle beeinträchtigt werden kann.

Die Druckschrift EP 3 913 272 A1 beschreibt einen Verbinder zum Verbinden zweier fluidführender Elemente

Die Druckschrift US 2006/0145475 A1 beschreibt einen Fluidschnellverbinder.

Die Druckschrift US 2019/0178429 A1 beschreibt einen Verbinder zur Verbindung zwischen zwei Fluidleitungen. Insbesondere offenbart diese Druckschrift im Vergleich zum gegenwärtigen Anspruch 1 weder einen den Einführstutzen umlaufenden ersten Flansch noch, dass die eine Mehrzahl von Verriegelungsarmen an einem Armende jeweils einen Verriegelungsvorsprung aufweist, welcher ausgebildet ist, die Hülsenwandung zu hintergreifen.

Es ist die der Erfindung zugrundeliegende Aufgabe, ein Verbindungselement und eine Fluidverbindungsanordnung für eine Fluidverbindung anzugeben, bei welchem, bzw. bei welcher eine reduzierte lonenauswaschung sichergestellt werden kann.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Verbindungselement zum Herstellen einer Fluidverbindung mit zwei Fluidleitungen gelöst, mit einer Aufnahmehülse, welche mit einer ersten Fluidleitung fluidtechnisch verbindbar ist, wobei die Aufnahmehülse eine Hülsenwandung aufweist, welche einen Hülseninnenraum begrenzt, wobei in der Hülsenwandung eine Mehrzahl von Hülsenschlitzen geformt ist, einem Einführstutzen, welcher mit einer zweiten Fluidleitung fluidtechnisch verbindbar ist, wobei der Einführstutzen in den Hülseninnenraum der Aufnahmehülse einführbar ist, um die Fluidverbindung bereitzustellen, wobei der Einführstutzen eine Stutzenwandung aufweist, an welcher eine den Einführstutzen zumindest abschnittsweise umlaufende Nut geformt ist, wobei im eingeführten Zustand des Einführstutzens in die Aufnahmehülse die Mehrzahl von Hülsenschlitzen der Aufnahmehülse fluchtend zu der Nut des Einführstutzens angeordnet ist, und einem Verriegelungselement zum Verriegeln des Einführstutzens an der Aufnahmehülse, wobei das Verriegelungselement eine Mehrzahl von Verriegelungsarmen aufweist, wobei im eingeführten Zustand des Einführstutzens in die Aufnahmehülse die Verriegelungsarme jeweils in einen Hülsenschlitz der Mehrzahl von Hülsenschlitzen und in die Nut eingreifen, um den Einführstutzen an der Aufnahmehülse zu verriegeln, wobei der Einführstutzen und/oder die Aufnahmehülse zumindest abschnittweise aus Polyphthalamid (PPA) oder Polyphenylensulfid (PPS) geformt ist.

Dadurch wird beispielsweise der technische Vorteil erreicht, dass durch die Verwendung von Polyphthalamid (PPA) oder Polyphenylensulfid (PPS) als Material der Aufnahmehülse und/oder des Einführstutzens entsprechende lonenauswaschungen, welche beim Kontakt der Aufnahmehülse und des Einführstutzens mit entsprechend durchgeführtem Fluid auftreten, vorteilhaft reduziert werden können.

Somit eignet sich das aus Polyphthalamid (PPA) und/oder Polyphenylensulfid (PPS) geformte Verbindungselement für den Einsatz in Bereichen, in denen eine signifikante Reduzierung von lonenauswaschungen erforderlich ist, wie z.B. in fluidführenden Systemen zur fluidtechnischen Verbindung einer Fahrzeug-Brennstoffzelle mit entsprechenden Wasserstoff-, Luft- und/oder Kühlwasser-Zuführungsleitungen, bzw. -Abführungsleitungen.

Insbesondere ist sowohl die Aufnahmehülse als auch der Einführstutzen zumindest abschnittweise aus Polyphthalamid (PPA) geformt. Alternativ ist insbesondere sowohl die Aufnahmehülse als auch der Einführstutzen zumindest abschnittweise aus Polyphenylensulfid (PPS) geformt. Alternativ ist insbesondere die Aufnahmehülse zumindest abschnittweise aus Polyphthalamid (PPA) und ist der Einführstutzen zumindest abschnittweise aus Polyphenylensulfid (PPS) geformt. Alternativ ist insbesondere die Aufnahmehülse zumindest abschnittweise aus Polyphenylensulfid (PPS) und ist der Einführstutzen zumindest abschnittweise aus Polyphthalamid (PPA) geformt.

Insbesondere besteht die Aufnahmehülse vollständig aus Polyphthalamid (PPA) oder Polyphenylensulfid (PPS). Insbesondere besteht der Einführstutzen vollständig aus Polyphthalamid (PPA) oder Polyphenylensulfid (PPS).

Alternativ weist insbesondere die Aufnahmehülse an einem Bereich, welcher in Kontakt mit dem geführten Fluid steht, eine Schicht aus Polyphthalamid (PPA) oder Polyphenylensulfid (PPS) auf. Alternativ weist insbesondere der Einführstutzen an einem Bereich, welcher in Kontakt mit dem geführten Fluid steht, eine Schicht aus Polyphthalamid (PPA) oder Polyphenylensulfid (PPS) auf.

Hierbei weist der Einführstutzen insbesondere einen ersten Fluidkanal zum Leiten von Fluid auf und weist die Aufnahmehülse insbesondere einen zweiten Fluidkanal zum Leiten von Fluid auf, wobei der erste und zweite Fluidkanal in dem Verbindungelement fluidtechnisch verbunden sind, um eine Leitung von Fluid durch das Verbindungselement sicherzustellen.

Ferner ergibt sich der technische Vorteil, dass durch das Verbindungselement eine stabile und besonders fluiddichte Verbindung zwischen der Aufnahmehülse, welche mit der ersten Fluidleitung fluidtechnisch verbindbar ist, und dem Einführstutzen, welcher mit der zweiten Fluidleitung fluidtechnisch verbindbar ist, erreicht wird, welche einfach zu montieren ist und hohen Druckbelastungen vorteilhaft widerstehen kann, ohne dass Fluid austritt.

Insbesondere bei Wasserstoffleitungen, in welchen der Wasserstoff teilweise mit hohem Druck geleitet wird, ist dies von Vorteil.

Zudem ergibt sich der technische Vorteil, dass die fluiddichte Verbindung zwischen dem Einführstutzen und der Aufnahmehülse auch wieder einfach gelöst werden, z.B. bei einer beabsichtigten Demontage des Verbindungselements, in dem das Verriegelungselement wieder aus den entsprechenden Hülsenschlitzen herausgezogen wird, insbesondere durch den Einsatz eines geeigneten Werkzeugs.

Insbesondere ist die Aufnahmehülse und/oder der Einführstutzen jeweils als ein Kunststoffspritzgussteil ausgebildet, welches einfach zu fertigen ist.

Insbesondere ist die Aufnahmehülse, mit der ersten Fluidleitung stoffschlüssig, insbesondere verklebt oder verschweißt, formschlüssig, oder kraftschlüssig, insbesondere verrastet, verbindbar, bzw. verbunden. Insbesondere ist der Einführstutzen, mit der zweiten Fluidleitung stoffschlüssig, insbesondere verklebt oder verschweißt, formschlüssig, oder kraftschlüssig, insbesondere verrastet, verbindbar, bzw. verbunden.

Insbesondere umläuft die Nut die Stutzenwandung des Einführstutzens vollständig.

Insbesondere umfasst die erste und/oder zweite Fluidleitung einen Fluidschlauch oder ein Fluidrohr.

Erfindungsgemäß weist die Mehrzahl von Hülsenschlitzen der Aufnahmehülse einen ersten Hülsenschlitz und einen dem ersten Hülsenschlitz gegenüberliegenden zweiten Hülsenschlitz auf, wobei die Mehrzahl von Verriegelungsarmen des Verriegelungselements einen ersten Verriegelungsarm und einen dem ersten Verriegelungsarm gegenüberliegenden zweiten Verriegelungsarm aufweist, wobei der erste Verriegelungsarm in den ersten Hülsenschlitz und in die Nut des Einführstutzens eingreift, und wobei der zweite Verriegelungsarm in den zweiten Hülsenschlitz und in die Nut des Einführstutzens eingreift, um den Einführstutzen an der Aufnahmehülse zu verriegeln.

Dadurch wird der technische Vorteil erreicht, dass durch die beiden sich gegenüberliegenden Verriegelungsarme eine wirksame beidseitige Beaufschlagung des Einführstutzens mit einer Kraft sichergestellt wird, was eine wirksame Fixierung des Einführstutzens in der Aufnahmehülse sicherstellt.

Erfindungsgemäß weist das Verriegelungselement einen Bügelabschnitt auf, welcher den ersten Verriegelungsarm mit dem zweiten Verriegelungsarm verbindet, wobei der erste und zweite Verriegelungsarm jeweils federelastisch mit dem Bügelabschnitt verbunden sind, um ein Aufspreizen des ersten und zweiten Verriegelungsarms beim Einführen des Verriegelungselements in die Aufnahmehülse zu erreichen.

Dadurch wird der technische Vorteil erreicht, dass die federelastisch mit dem Bügelabschnitt verbundenen Verriegelungsarme beim Einführen des Verriegelungselements in die entsprechenden Hülsenschlitze der Aufnahmehülse vorteilhaft aufgespreizt werden können.

Insbesondere sind der erste und zweite Verriegelungsarm ausgebildet, in einem eingeführten Zustand des Verriegelungselements, den Einführstutzen, welcher in die Aufnahmehülse eingeführt ist, mit einer Kraft zu beaufschlagen, um eine stabile Verriegelung des Einführstutzens in der Aufnahmehülse sicherzustellen.

In einer vorteilhaften Ausführungsform weist die Aufnahmehülse einen dritten Hülsenschlitz auf, welcher zwischen dem ersten und zweiten Hülsenschlitz angeordnet ist, und wobei der Bügelabschnitt zumindest abschnittsweise in den dritten Hülsenschlitz und in die Nut des Einführstutzens eingreift, um den Einführstutzen an der Aufnahmehülse zu verriegeln.

Dadurch wird der technische Vorteil erreicht, dass durch das Eingreifen des Bügelabschnitts in den dritten Hülsenschlitz und in die Nut des Einführstutzens die Wirksamkeit der Verriegelung des Einführstutzens in der Aufnahmehülse vorteilhaft verbessert werden kann.

In einer vorteilhaften Ausführungsform weist die Mehrzahl von Verriegelungsarmen jeweils eine Verriegelungskontur auf, welche in den jeweiligen Hülsenschlitz und in die Nut eingreifen, wobei im eingeführten Zustand des Einführstutzens die Verriegelungskonturen den Einführstutzen mit einer Kraft beaufschlagen, um den Einführstutzen in der Aufnahmehülse zu verriegeln.

Dadurch wird der technische Vorteil erreicht, dass die Verriegelungskonturen der Verriegelungsarme eine besonders wirksame Verriegelung des Einführstutzens in der Aufnahmehülse sicherstellen.

Insbesondere weist der erste Verriegelungsarm eine erste Verriegelungskontur auf, welche in den ersten Hülsenschlitz der Aufnahmehülse und in die Nut des Einführstutzens eingreift, so dass im eingeführten Zustand des Einführstutzens die erste Verriegelungskontur den Einführstutzen mit einer Kraft beaufschlagt, um den Einführstutzen in der Aufnahmehülse zu verriegeln.

Insbesondere weist der zweite Verriegelungsarm eine zweite Verriegelungskontur auf, welche insbesondere der ersten Verriegelungskontur gegenüberliegend angeordnet ist, und welche in den zweiten Hülsenschlitz der Aufnahmehülse und in die Nut des Einführstutzens eingreift, so dass im eingeführten Zustand des Einführstutzens die zweite Verriegelungskontur den Einführstutzen mit einer Kraft beaufschlagt, um den Einführstutzen in der Aufnahmehülse zu verriegeln.

Insbesondere weist der Bügelabschnitt des Verriegelungselements eine dritte Verriegelungskontur auf, welche in den dritten Hülsenschlitz der Aufnahmehülse und in die Nut des Einführstutzens eingreift, so dass im eingeführten Zustand des Einführstutzens die dritte Verriegelungskontur den Einführstutzen mit einer Kraft beaufschlagt, um den Einführstutzen in der Aufnahmehülse zu verriegeln.

Insbesondere ist die Mehrzahl von Verriegelungskonturen, insbesondere die erste und/oder zweite Verriegelungskontur, jeweils als ein nach innen gebogener Abschnitt des jeweiligen Verriegelungsarms, insbesondere des ersten und/oder zweiten Verriegelungsarms, ausgebildet.

Ein nach innen gebogener Abschnitt der Mehrzahl von Verriegelungskonturen ist hiermit auf den Einführstutzen zu nach innen gebogen.

Alternativ kann die Mehrzahl von Verriegelungskonturen, insbesondere die erste und/oder zweite Verriegelungskontur, jeweils als ein nach außen gebogener Abschnitt des jeweiligen Verriegelungsarms, insbesondere des ersten und/oder zweiten Verriegelungsarms, ausgebildet sein.

Ein nach innen gebogener Abschnitt der Mehrzahl von Verriegelungskonturen ist hiermit von dem Einführstutzen weg nach außen gebogen.

Insbesondere kann die Mehrzahl von Verriegelungskonturen, insbesondere die erste und/oder zweite Verriegelungskontur jeweils einen gebogenen Konturabschnitt aufweisen, welcher jeweils durch einen ersten und zweiten Konturvorsprung begrenzt ist. Die Konturvorsprünge stellen hierbei eine wirksame verliersichere Verriegelung sicher.

Insbesondere ist die dritte Verriegelungskontur als ein nach innen gebogener Abschnitt des Bügelabschnitts des Verriegelungselements ausgebildet.

Erfindungsgemäß weist die Mehrzahl von Verriegelungsarmen, insbesondere der erste Verriegelungsarm und/oder der zweite Verriegelungsarm, an einem Armende, insbesondere an einem ersten und/oder zweiten Armende, jeweils einen Verriegelungsvorsprung auf, welcher ausgebildet ist, die Hülsenwandung zu hintergreifen, um eine verliersichere Verriegelung des Verriegelungselements an der Aufnahmehülse sicherzustellen.

Dadurch wird der technische Vorteil erreicht, dass bei einem Aufspreizen des Verriegelungselements, bzw. der Verriegelungsarme, durch das Hintergreifen der Hülsenwandung der Aufnahmehülse mittels der Verriegelungsvorsprünge der Verriegelungsarme eine stabile Befestigung des Verriegelungselements an der Aufnahmehülse weiterhin sichergestellt werden kann. Insbesondere wird durch die Verriegelungsvorsprünge ein unbeabsichtigtes Herausgleiten der Verriegelungsarme aus den Hülsenschlitzen verhindert, so dass sich die Verriegelung nicht unbeabsichtigt lösen kann.

In einer vorteilhaften Ausführungsform umfasst das Verriegelungselement ein Dichtungselement, welches in dem Hülseninnenraum der Aufnahmehülse aufgenommen ist und an einem ersten Anschlag der Hülsenwandung der Aufnahmehülse anliegt, wobei insbesondere der in der Aufnahmehülse aufgenommene Einführstutzen gegen das Dichtungselement anpressbar ist, um das Dichtungselement gegen den ersten Anschlag der Hülsenwandung zu pressen, um eine fluiddichte Abdichtung sicherzustellen.

Dadurch wird der technische Vorteil erreicht, dass durch das Dichtungselement eine fluiddichte Abdichtung zwischen dem Einführstutzen und der Aufnahmehülse innerhalb des Hülseninnenraums sichergestellt werden kann.

Insbesondere ist das Dichtungselement als ein Dichtungsring geformt. Insbesondere ist der erste Anschlag als ein die Hülsenwandung der Aufnahmehülse zumindest abschnittweise, insbesondere vollständig, umlaufender erster Anschlag geformt, an welchem das Dichtungselement, insbesondere Dichtungsring, anliegt.

Insbesondere weist das Dichtungselement, insbesondere Dichtungsring, eine Öffnung auf, durch welche der Einführstutzen durchgeführt ist.

In einer vorteilhaften Ausführungsform umfasst das Verriegelungselement ein Stabilisierungselement, welches in dem Hülseninnenraum der Aufnahmehülse aufgenommen ist und an dem Dichtungselement anliegt, wobei insbesondere der in der Aufnahmehülse aufgenommene Einführstutzen gegen das Stabilisierungselement anpressbar ist, welches wiederum gegen das Dichtungselement anpressbar ist, um das Dichtungselement gegen den ersten Anschlag der Hülsenwandung zu pressen, um eine fluiddichte Abdichtung sicherzustellen.

Dadurch wird der technische Vorteil erreicht, dass durch das Stabilisierungselement im Zusammenspiel mit dem Dichtungselement eine fluiddichte Abdichtung zwischen dem Einführstutzen und der Aufnahmehülse innerhalb des Hülseninnenraums sichergestellt werden kann.

Insbesondere ist das Stabilisierungselement als ein Stabilisierungsring geformt.

Insbesondere weist das Stabilisierungselement, insbesondere Stabilisierungsring, eine Öffnung auf, durch welche der Einführstutzen durchgeführt ist.

In einer vorteilhaften Ausführungsform weist der Einführstutzen einen den Einführstutzen umlaufenden ersten Flansch und einen den Einführstutzen umlaufenden zweiten Flansch auf, wobei der erste und zweite Flansch insbesondere eine weitere Nut zur Aufnahme eines weiteren Dichtungselements begrenzen.

Dadurch wird der technische Vorteil erreicht, dass durch die weitere Nut, welche durch die beiden Flansche begrenzt wird, eine vorteilhafte Aufnahme eines weiteren Dichtungselements ermöglicht wird.

Erfindungsgemäß weist der Einführstutzen einen den Einführstutzen umlaufenden zweiten Flansch und eine den Einführstutzen umlaufende zweite abgeschrägte Einführkante auf, wobei der zweite Flansch und die zweite abgeschrägte Einführkante die Nut zum Eingreifen des Verriegelungselements begrenzen.

Dadurch wird der technische Vorteil erreicht, dass das Verriegelungselement, insbesondere die Verriegelungskonturen in der Nut zwischen dem zweiten Flansch und der zweiten abgeschrägten Einführkante vorteilhaft aufgenommen werden kann, um eine wirksame Verriegelung sicherzustellen. Die zweite abgeschrägte Einführkante ermöglicht bei einem vor dem Einführen des Einführstutzens bereits an der Aufnahmehülse angebrachten Verriegelungselement, dass das Verriegelungselement an der Schräge der zweiten abgeschrägten Einführkante vorbeigleiten kann, um anschließend in die Nut zwischen dem zweiten Flansch und der zweiten abgeschrägten Einführkante einzugreifen.

Insbesondere ist die Schräge der zweiten abgeschrägte Einführkante an einer von der Nut abgewandten Seite der zweiten abgeschrägten Einführkante angeordnet.

In einer vorteilhaften Ausführungsform ist an einem Einführende des Einführstutzens eine den Einführstutzen umlaufende erste abgeschrägte Einführkante angeordnet, um ein Einführen des Einführstutzens in die Aufnahmehülse zu erleichtern.

Dadurch wird der technische Vorteil erreicht, dass die den Einführstutzen umlaufende erste abgeschrägte Einführkante, welche an dem ersten Einführende des Einführstutzens angeordnet ist, gegen das bereits an der Aufnahmehülse angeordnete Verriegelungselement anpressbar ist, um das Verriegelungselement, insbesondere die jeweilige Verriegelungskontur des Verriegelungselements, zu weiten, um ein Vorbeigleiten des Einführstutzens an dem Verriegelungselement während des Einführvorgangs des Einführstutzens zu ermöglichen.

In einer vorteilhaften Ausführungsform weist die Aufnahmehülse einen zweiten Anschlag auf, an welchem der in die Aufnahmehülse eingeführte Einführstutzen anliegt, um die Einführung des Einführstutzens zu begrenzen.

Dadurch wird der technische Vorteil erreicht, dass der in der Hülsenwandung der Aufnahmehülse geformte zweite Anschlag, die Einführbewegung des Einführstutzens in die Aufnahmehülse dadurch begrenzt, dass insbesondere ein Einführende des Einführstutzens an dem zweiten Anschlag anliegt.

In einer vorteilhaften Ausführungsform weist die Aufnahmehülse einen ersten Hülsenabschnitt zur Aufnahme des Einführstutzens und einen sich an den ersten Hülsenabschnitt anschließenden zweiten Hülsenabschnitt auf, wobei insbesondere der zweite Hülsenabschnitt an einer Außenseite eine Verbindungskontur zum Aufstecken der ersten Fluidleitung aufweist.

Dadurch wird der technische Vorteil erreicht, dass der erste Hülsenabschnitt eine wirksame Aufnahme des Einführstutzens sicherstellt, und dass der zweite Hülsenabschnitt eine Verbindungskontur zum Aufstecken der ersten Fluidleitung aufweist.

Insbesondere ist ein Innendurchmesser des zweiten Hülsenabschnitts geringer als ein Innendurchmesser des ersten Hülsenabschnitts.

In einer vorteilhaften Ausführungsform besteht das Verriegelungselement aus einem Metall, und ist insbesondere als eine gebogene metallische Feder geformt, oder besteht das Verriegelungselement aus einem Kunststoff, und ist insbesondere als eine Kunststoffklammer geformt.

Dadurch wird der technische Vorteil erreicht, dass das aus einem Metall, insbesondere als gebogene Feder, geformte Verriegelungselement eine ausreichende mechanische Stabilität aufweist, um auch hohen Druckbelastungen widerstehen zu können. Auch ein aus einem Kunststoff, insbesondere als Kunststoffklammer, geformtes Verriegelungselement, weist eine ausreichende mechanische Stabilität auf, um den hohen Druckbelastungen widerstehen zu können, und ist zudem einfach und kostengünstig zu fertigen.

Gemäß einem zweiten Aspekt der Erfindung wird die Aufgabe durch eine Fluidverbindungsanordnung gelöst, umfassend ein Verbindungselement nach dem ersten Aspekt, eine erste Fluidleitung und eine zweite Fluidleitung, wobei ein erstes Leitungsende der ersten Fluidleitung mit der Aufnahmehülse verbunden ist, und wobei ein zweites Leitungsende der zweiten Fluidleitung mit dem Einführstutzen verbunden ist.

Dadurch kann eine Fluidverbindungsanordnung erhalten werden, welche eine hohe Widerstandskraft gegenüber lonenauswaschungen aufweist, und welche eine wirksame verriegelte Verbindung zu den beiden mit dem Verbindungselement verbundenen Fluidleitungen sicherstellt.

Die in Bezug auf das Verbindungselement gemäß dem ersten Aspekt angeführten vorteilhaften Ausführungsformen gelten ebenso als vorteilhafte Ausführungsformen der Fluidverbindungsanordnung gemäß dem zweiten Aspekt.

Ausführungsbeispiele der Erfindung sind in den Zeichnungen dargestellt und werden im Folgenden näher beschrieben.

Es zeigen:
- Fig. 1: eine perspektivische Ansicht eines Verbindungselements gemäß einer Ausführungsform;
- Fig. 2: eine perspektivische Ansicht des in Fig. 1 dargestellten Verbindungselements in einem verriegelten Zustand;
- Fig. 3: eine weitere perspektivische Ansicht des in Fig. 1 und Fig. 2 dargestellten Verbindungselements;
- Fig. 4: eine weitere perspektivische Ansicht des in Fig. 3 dargestellten Verbindungselements;
- Fig. 5: eine weitere perspektivische Ansicht des in Fig. 2 dargestellten Verbindungselements in dem verriegelten Zustand; und
- Fig. 6: eine perspektivische Ansicht eines Verbindungselements gemäß einer weiteren Ausführungsform.

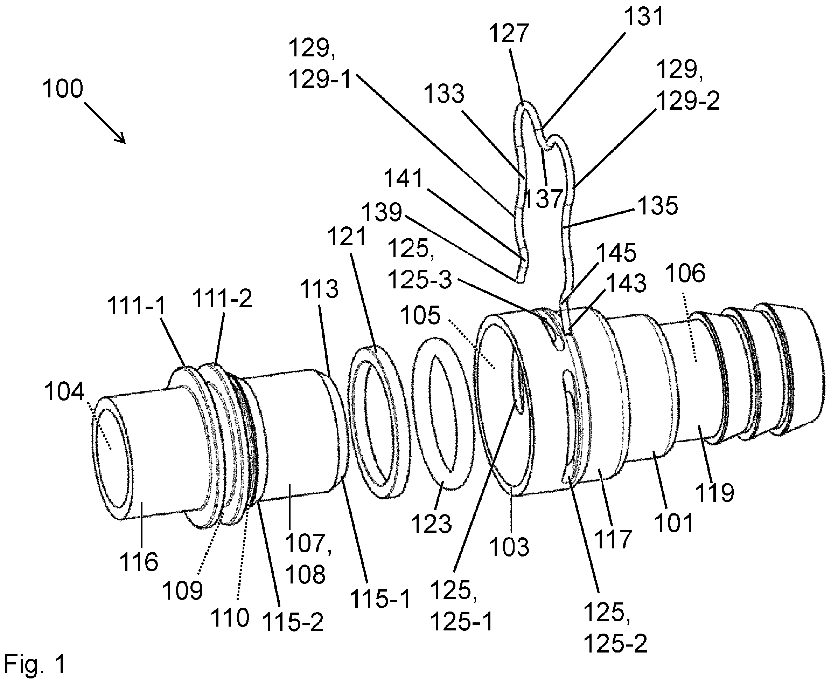

Die Fig. 1 zeigt eine perspektivische Ansicht eines Verbindungselements 100 zum Herstellen einer Fluidverbindung mit zwei in Fig. 1 nicht dargestellten Fluidleitungen. In der Fig. 1 ist eine Explosionsdarstellung des Verbindungselements 100 gezeigt.

Das Verbindungselement 100, bzw. die entsprechende in Fig. 1 nicht dargestellte Fluidverbindungsanordnung umfassend das Verbindungselement 100 und die beiden Fluidleitungen, dient zum Herstellen einer Fluidverbindung in einer Vielzahl von fluidführenden Systemen eines Fahrzeuges. Das Verbindungselement 100 kann zur fluidtechnischen Verbindung von Kraftstoff-, Kühlflüssigkeits-, Ladeluft-, Bremsflüssigkeits-, Wasser-, Wasserstoff-, SCR-, und/oder Getriebeölleitungen in Fahrzeugen eingesetzt werden. Das Verbindungselement 100 gemäß der vorliegenden Offenbarung wird insbesondere zur fluidtechnischen Verbindung von Wasserstoff,- Luft,- und Kühlwasserleitungen in mit Brennstoffzellen betriebenen Fahrzeugen eingesetzt, wobei insbesondere aufgrund des hohen Drucks des geleiteten Wasserstoffs besonders hohe Anforderung an die Fluiddichtigkeit der Fluidverbindung gestellt werden. Das Verbindungselement 100 kann insbesondere auch beispielsweise in Kühlmittel-führenden Fluidleitungen eingesetzt werden, welche insbesondere zur Kühlung von Batteriezellen in einem elektrisch angetriebenen Fahrzeug verwendet werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch fluidtechnische Schnittstellen miteinander verbunden werden, um eine wirksame Leitung von Fluid sicherzustellen. Hierbei werden an die fluidtechnischen Schnittstellen zwischen einer entsprechenden fluidführenden Leitung und einem entsprechenden Verbindungselement 100 hohe Anforderungen in Bezug auf Stabilität und Fluiddichtigkeit gestellt.

Bei der Leitung von Fluid durch entsprechende fluidführende Systeme, insbesondere bei der Leitung von Wasserstoff, Luft, bzw. Kühlwasser zu einer Brennstoffzelle, ergibt sich oftmals das Problem der Ionenauswaschung bei herkömmlich verwendeten Kunststoffen, wie z.B. Polyamid 66, Polyamid 11 oder Polyamid 12, in den entsprechenden fluidführenden Systemen.

In mit Brennstoffzellen betriebenen Fahrzeugen wird z.B. Wasserstoff und Luft der Brennstoffzelle zur "kalten Oxidation" des Wasserstoffs durch entsprechende fluidführende Systeme zugeführt, und das als Reaktionsprodukt entstehende Wasser wird nach der Reaktion durch entsprechende fluidführende Systeme wieder aus der Brennstoffzelle abgeführt. Zudem wird in mit Brennstoffzellen betriebenen Fahrzeugen ein Kühlkreislauf, z.B. mit Wasser als Kühlmittel, benötigt, um während der Reaktion entstehende Wärme wirksam von der Brennstoffzelle abzuführen.

Durch die entsprechende nachteilige lonenauswaschung bei fluidführenden Systemen bestehend aus herkömmlich verwendeten Kunststoffen, wie z.B. Polyamid 66, Polyamid 11 oder Polyamid 12, erhöht sich beispielsweise die Ionenkonzentration des entsprechend durchgeführten Kühlwassers, wodurch sich die Leitfähigkeit des Kühlwassers erhöht, was unter Umständen zu Kurzschlüssen in der Brennstoffzelle führen kann.

Ferner ergibt sich das Problem, dass die entsprechende nachteilige lonenauswaschung bei fluidführenden Systemen bestehend aus herkömmlich verwendeten Kunststoffen, wie z.B. Polyamid 66, Polyamid 11 oder Polyamid 12, dass in dem der Brennstoffzelle zugeführten Wasserstoff, bzw. Luft Kondenswasser vorhanden sein kann, welches ebenfalls aus den herkömmlich verwendeten Kunststoffen ausgewaschene Ionen aufnimmt, wobei die ausgewaschenen Ionen anschließend in Bauteilen der Brennstoffzelle, wie z.B. der Membran der Brennstoffzelle abgelagert werden können, wodurch die Funktion der Brennstoffzelle beeinträchtigt werden kann.

Um das Problem der Ionenauswaschung zu überwinden, besteht das nachfolgend beschriebene Verbindungselement 100 gemäß der vorliegenden Offenbarung aus dem spezifischen Kunststoff Polyphthalamid (PPA), bzw. Polyphenylensulfid (PPS), welche eine signifikante Reduzierung einer entsprechenden lonenauswaschung sicherstellt, und damit den Einsatz des Verbindungselements 100 gemäß der vorliegenden Offenbarung zur Leitung von Wasserstoff, Luft und auch Kühlwasser in fluidführenden Systemen beispielsweise zum Versorgen von Brennstoffzellen eignet, um das oben genannte Problem zu lösen.

Das in Fig. 1 dargestellte Verbindungselement 100 dient zum Herstellen einer fluiddichten, insbesondere gasdichten, Verbindung zwischen zwei in Fig. 1 nicht dargestellten Fluidleitungen.

Das Verbindungselement 100 umfasst eine Aufnahmehülse 101, welche mit einer in Fig. 1 nicht dargestellte ersten Fluidleitung fluidtechnisch verbindbar ist. Die erste Fluidleitung ist insbesondere mit der Aufnahmehülse 101 stoffschlüssig, insbesondere verschweißt oder verklebt, formschlüssig, insbesondere aufgeschoben, und/oder kraftschlüssig, insbesondere verrastet, verbunden. Die Aufnahmehülse 101 weist eine Hülsenwandung 103 auf, welche einen Hülseninnenraum 105 begrenzt.

Das Verbindungselement 100 umfasst einen Einführstutzen 107, welcher mit einer in Fig. 1 nicht dargestellten zweiten Fluidleitung fluidtechnisch verbindbar ist. Die zweite Fluidleitung ist insbesondere mit dem Einführstutzen 107 stoffschlüssig, insbesondere verschweißt oder verklebt, formschlüssig, insbesondere aufgeschoben, und/oder kraftschlüssig, insbesondere verrastet, verbunden. Der Einführstutzen 107 ist in den Hülseninnenraum 105 der Aufnahmehülse 101 einführbar, um die Fluidverbindung bereitzustellen.

Innerhalb des Einführstutzens 107 ist ein erster Fluidkanal 104 zum Leiten von Fluid und innerhalb der Aufnahmehülse 101 ist ein zweiter Fluidkanal 106 zum Leiten von Fluid angeordnet. Im eingeführten Zustand des Einführstutzens 107 in die Aufnahmehülse 101 sind der erste und zweite Fluidkanal 104, 106 miteinander verbunden, um Fluid durch das Verbindungselement 100 zu leiten.

Der Einführstutzen 107 weist eine Stutzenwandung 108 auf, in welcher eine den Einführstutzen 107 zumindest abschnittsweise, insbesondere vollständig, umlaufende weitere Nut 109 geformt ist, welche durch einen weiteren Flansch 111-1 und einen ersten Flansch 111-2 begrenzt ist. Hierbei umlaufen der weitere und erste Flansch 111-1, 111-2 den Einführstutzen 107 ebenfalls zumindest abschnittsweise, insbesondere vollständig. Die weitere Nut 109 dient insbesondere zur Aufnahme eines in Fig. 1 nicht dargestellten zweiten Dichtungsrings.

Der Einführstutzen 107 weist ferner an einem Einführende 113 des Einführstutzens 107 eine den Einführstutzen 107 umlaufende weitere abgeschrägte Einführkante 115-1 auf. Der Einführstutzen 107 weist ferner an einer dem Einführende 113 zugewandten Seite des ersten Flansches 111-2 eine den Einführstutzen 107 umlaufende erste abgeschrägte Einführkante 115-2 auf.

Zwischen dem ersten Flansch 111-2 und der ersten abgeschrägten Einführkante 115-2 ist eine Nut 110 geformt.

Die Aufnahmehülse 101 weist einen ersten Hülsenabschnitt 117 zur Aufnahme des Einführstutzens 107 auf und einen sich an den ersten Hülsenabschnitt 117 anschließenden zweiten Hülsenabschnitt 119 auf, wobei an der Außenseite des zweiten Hülsenabschnitts 119 eine Verbindungskontur zum Aufstecken der ersten Fluidleitung angeordnet ist.

Ein in Fig. 1 nicht dargestellter Innendurchmesser des zweiten Hülsenabschnitts 119 ist geringer als ein Innendurchmesser des ersten Hülsenabschnitts 117 (welcher mit einen Außendurchmesser des in den ersten Hülsenabschnitts 119 eingeführten Einführstutzens 107 korreliert ist). Somit kann der Einführstutzen 107 vorteilhaft in dem ersten Hülsenabschnitts 117 der Aufnahmehülse 101 aufgenommen werden.

In der Fig. 1 ist zudem noch ein Verbindungsabschnitt 116 des Einführstutzens 107 zu erkennen, welcher auf einer dem Einführende 113 abgewandten Seite des Einführstutzens 107 angeordnet ist, und welcher insbesondere zur fluidtechnischen Verbindung mit der zweiten Fluidleitung geformt ist.

Aus der Fig. 1 ist ferner zu entnehmen, dass das Verbindungselement 100 ein Stabilisierungselement, insbesondere einen Stabilisierungsring 121 aufweist, welcher auf das Einführende 113 des Einführstutzens 107 aufgesteckt wird, und welcher im eingeführten Zustand des Einführstutzens 107 an der zweiten abgeschrägten Einführkante 115-2 des Einführstutzens 107 anliegt.

Aus der Fig. 1 ist ferner zu entnehmen, dass das Verbindungselement 100 ein Dichtungselement, insbesondere einen Dichtungsring 123 aufweist, welcher nach dem Aufstecken des Stabilisierungsrings 121 auf das Einführende 113 des Einführstutzens 107 aufgesteckt wird, wobei der Dichtungsring 123 im eingeführten Zustand des Einführstutzens 107 sowohl an dem Stabilisierungsring 121 als auch an der Hülsenwandung 103 der Aufnahmehülse 101 anliegt, um eine wirksame Abdichtung zwischen dem Einführstutzen 107 und der Aufnahmehülse 101 sicherzustellen.

Aus der Fig. 1 geht ferner hervor, dass die Hülsenwandung 103 der Aufnahmehülse 101 eine Mehrzahl von Hülsenschlitzen 125 aufweist, wobei die Mehrzahl von Hülsenschlitzen 125 insbesondere einen ersten Hülsenschlitz 125-1 und einen dem ersten Hülsenschlitz 125-1 gegenüberliegenden zweiten Hülsenschlitz 125-2 aufweist, und insbesondere einen dritten Hülsenschlitz 125-3 aufweist, welcher zwischen dem ersten und zweiten Hülsenschlitz 125-1, 125-2 in der Hülsenwandung 103 geformt ist.

In dem in Fig. 1 nicht dargestellten eingeführten Zustand des Einführstutzens 107 in die Aufnahmehülse 101 ist der Mehrzahl der Hülsenschlitze 125, 125-1, 125-2, 125-3 fluchtend zu der Nut 110 des Einführstutzens 107 angeordnet ist. Insbesondere ist der erste, zweite und dritte Hülsenschlitz 125-1, 125-2, 125-3 fluchtend zu der Nut 110 des Einführstutzens 107 angeordnet. Somit kann das in Fig. 1 dargestellte Verriegelungselement 127 durch die entsprechenden Hülsenschlitze 125, 125-1, 125-2, 125-3 geführt werden, um den Einführstutzen 107 an der Aufnahmehülse 101 zu verriegeln.

Hierbei weist das Verriegelungselement 127 eine Mehrzahl von Verriegelungsarmen 129 auf, insbesondere einen ersten Verriegelungsarm 129-1 und einen dem ersten Verriegelungsarm 129 gegenüberliegenden zweiten Verriegelungsarm 129-2 auf.

In dem in Fig. 1 nicht dargestellten eingeführten Zustand des Einführstutzens 107 greift der erste Verriegelungsarm 129-1 zumindest abschnittsweise in dem ersten Hülsenschlitz 125-1 und in die Nut 110 ein und greift der zweite Verriegelungsarm 129-2 zumindest abschnittsweise in den zweiten Hülsenschlitz 125-2 und in die Nut 110 ein, insbesondere an einander gegenüberliegenden Seiten der Nut 110 so dass das Verriegelungselement 127 den Einführstutzen 107 wirksam an der Aufnahmehülse 101 verriegelt wird.

Das Verriegelungselement 127 weist ferner einen Bügelabschnitt 131 auf, welcher den ersten Verriegelungsarm 129-1 und den zweiten Verriegelungsarms 129-2 verbindet, wobei der erste und zweite Verriegelungsarm 129-1, 129-2 jeweils federelastisch mit dem Bügelabschnitt 131 verbunden sind, um ein Aufspreizen des ersten und zweiten Verriegelungsarms 129-1, 129-2 beim Einführen des Verriegelungselements 127 in die Aufnahmehülse 101 zu erreichen.

Somit können die Verriegelungsarme 129-1, 129-2 beim Einführen des Verriegelungselements 127 in die Hülsenschlitze 125, 125-1, 125-2, 125-3 wirksam aufgespreizt werden, so dass nach dem Einführen des Verriegelungselements 127 die Verriegelungsarme 129-1, 129-2 mit einer Federkraft gegen den Einführstutzen 107 pressen, um eine stabile Verriegelung sicherzustellen.

Insbesondere weist der erste Verriegelungsarm 129-1 ferner eine erste Verriegelungskontur 133 auf, weist der zweite Verriegelungsarm 129-2 eine der ersten Verriegelungskontur 133 gegenüberliegende zweite Verriegelungskontur 135 auf, und weist der Bügelabschnitt 131 eine dritte Verriegelungskontur 137 auf.

Im eingeführten Zustand des Einführstutzens 107 beaufschlagen die erste und zweite Verriegelungskontur 133, 135 den Einführstutzen 107 von einander gegenüberliegenden Seiten mit einer Kraft, und greift die dritte Verriegelungskontur 137 durch den dritten Hülsenschlitz 125-3 in die Nut 110 ein, um den Einführstutzen 107 an der Aufnahmehülse 101 zu verriegeln.

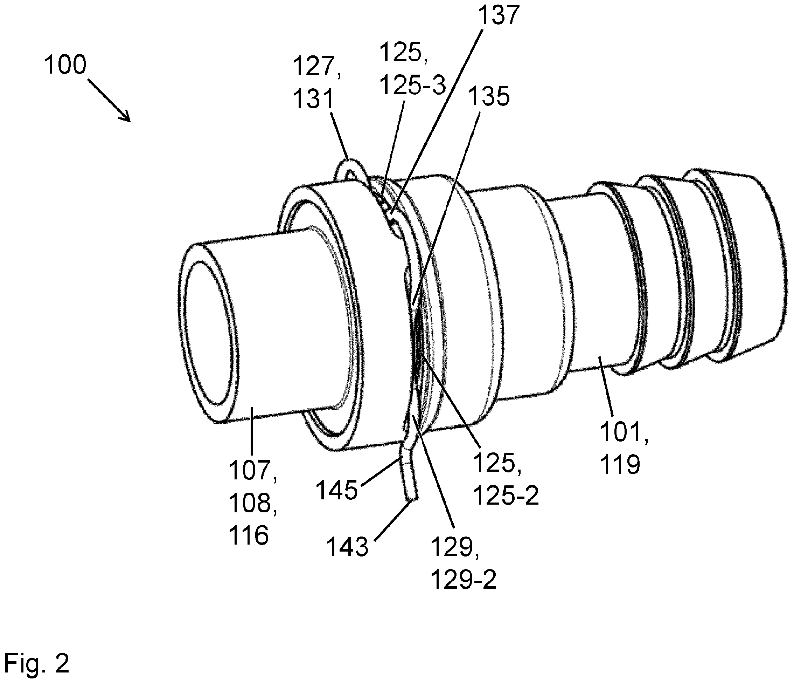

Für eine detaillierte Darstellung der Verriegelung des Einführstutzens 107 in der Aufnahmehülse 101 durch das Verriegelungselement 127 wird auf die nachfolgende Fig. 2 verwiesen.

Ferner geht aus der Fig. 1 hervor, dass das Verriegelungselement 127 an einem ersten Armende 139 des ersten Verriegelungsarms 129-1 einen ersten Verriegelungsvorsprung 141 aufweist, welcher ausgebildet ist, die Hülsenwandung 103 zu hintergreifen, um eine verliersichere Verriegelung des Verriegelungselements 127 an der Aufnahmehülse 101 sicherzustellen.

Ferner geht aus der Fig. 1 hervor, dass das Verriegelungselement 127 an einem zweiten Armende 143 des zweiten Verriegelungsarms 129-2 einen zweiten Verriegelungsvorsprung 145 aufweist, welcher ausgebildet ist, die Hülsenwandung 103 zu hintergreifen, um eine verliersichere Verriegelung des Verriegelungselements 127 an der Aufnahmehülse 101 sicherzustellen.

Wie bereits ausgeführt wurde, besteht die in Kontakt mit dem Fluid stehende Aufnahmehülse 101 aus Polyphthalamid (PPA) oder Polyphenylensulfid (PPS) und besteht der in Kontakt mit dem Fluid stehende Einführstutzen 107 aus Polyphthalamid (PPA) oder Polyphenylensulfid (PPS) um lonenauswaschungen zu reduzieren.

Das nicht in Kontakt mit dem Fluid stehende Verriegelungselement 127 besteht insbesondere aus einem Metall, und ist insbesondere als eine gebogene Metallfeder geformt. Auch wenn dies in Fig. 1 nicht dargestellt ist, kann das Verriegelungselement 127 insbesondere als ein aus einem Kunststoff, insbesondere als Kunststoffklammer, geformtes Verriegelungselement geformt sein.

Fig. 2 zeigt eine perspektivische Ansicht des in Fig. 1 dargestellten Verbindungselements in einem verriegelten Zustand.

In der Fig. 2 ist eine Ansicht des Verbindungselements 100 dargestellt, wobei der Einführstutzen 107 in der Aufnahmehülse 101 aufgenommen und durch das Verriegelungselement 127 verriegelt ist.

Wie aus der Fig. 2 zum Teil ersichtlich ist, greifen die erste Verriegelungskontur 133 des ersten Verriegelungsarms 129-1 und die zweite Verriegelungskontur 135 des zweiten Verriegelungsarms 129-2 des Verriegelungselements 127 von gegenüberliegenden Seiten aus in den jeweiligen ersten und zweiten Hülsenschlitz 125-1, 125-2 der Aufnahmehülse 101 und in die Nut 110 des Einführstutzens 107 ein.

Wie aus der Fig. 2 ferner ersichtlich ist, greift die dritte Verriegelungskontur 137 des Bügelabschnitts 131 des Verriegelungselements 127 in den dritten Hülsenschlitz 125-3 der Aufnahmehülse 101 und in die Nut 110 des Einführstutzens 107 ein.

Dadurch wird der Einführstutzen 107 von drei verschiedenen Seiten aus durch das Verriegelungselement 127 mit einer Kraft beaufschlagt und festgelegt.

Die an den jeweiligen Armenden 139, 143 des ersten und zweiten Verriegelungsarms 129-1, 129-2 angeordneten Verriegelungsvorsprünge 141, 145 greifen hinter die Hülsenwandung 103 der Aufnahmehülse 101 und verhindert ein unbeabsichtigtes Herausziehen des Verriegelungselements 127.

Falls die Verriegelung mit Absicht gelöst werden soll, kann der Nutzer beispielsweise mit einem Werkzeug die jeweiligen Armenden 139, 143 des ersten und zweiten Verriegelungsarms 129-1, 129-2 wieder auseinanderdrücken, so dass die Verriegelungsvorsprünge 141, 145 die Hülsenwandung 103 nicht mehr hintergreifen, und das Verriegelungselement 127 anschließend herausgezogen werden kann.

Für weitere Details wird auf die umfangreichen Ausführungen zur Fig. 1 verwiesen.

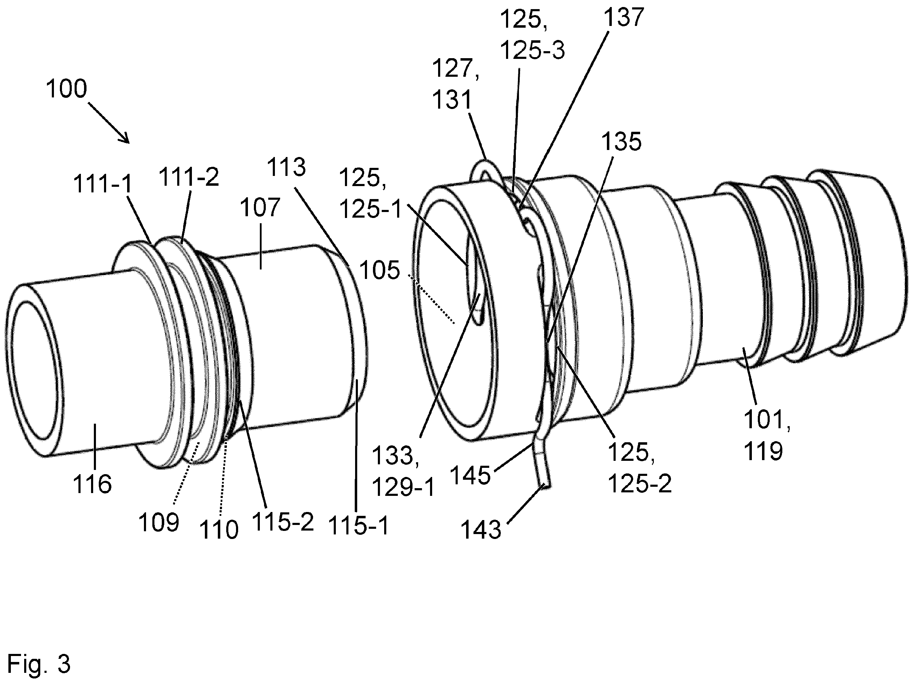

Fig. 3 zeigt eine weitere perspektivische Ansicht des in Fig. 1 und Fig. 2 dargestellten Verbindungselements.

In der in Fig. 3 gezeigten weiteren perspektivische Ansicht des Verbindungselements 100 ist das Verriegelungselement 127 bereits an der Aufnahmehülse 101 befestigt worden, bevor der Einführstutzen 107 anschließend und in der Fig. 3 nicht dargestellt in die Aufnahmehülse 101 eingeführt werden soll.

Wie aus der Fig. 3 hervor geht, greifen die erste Verriegelungskontur 133 des ersten Verriegelungsarms 129-1 und die zweite Verriegelungskontur 135 des zweiten Verriegelungsarms 129-2 des Verriegelungselements 127 von gegenüberliegenden Seiten aus in den jeweiligen ersten und zweiten Hülsenschlitz 125-1, 125-2 der Aufnahmehülse 101 107 ein.

Wie aus der Fig. 3 ferner ersichtlich ist, greift die dritte Verriegelungskontur 137 des Bügelabschnitts 131 des Verriegelungselements 127 in den dritten Hülsenschlitz 125-3 der Aufnahmehülse 101 ein.

Während des sich an die Darstellung in Fig. 3 anschließenden Einführens des Einführstutzens 107 in den Hülseninnenraum 105 der Aufnahmehülse 101 presst die erste abgeschrägte Einführkante 115-1 gegen das Verbindungselement 127, insbesondere gegen die erste, zweite und dritte Verriegelungskontur 133, 135, 137 des entsprechenden ersten und zweiten Verriegelungsarms 129-1, 129-2, bzw. des entsprechenden Bügelabschnitts 131, so dass der erste und zweite Verriegelungsarm 129-1, 129-2 und der Bügelabschnitt 131 nach außen gebogen werden, so dass das Einführende 113 des Einführstutzens 107 vorbeigleiten kann.

Die erste, zweite und dritte Verriegelungskontur 133, 135, 137 des entsprechenden ersten und zweiten Verriegelungsarms 129-1, 129-2, bzw. des entsprechenden Bügelabschnitts 131 gleiten während des weiteren Einführens des Einführstutzens 107 in die Aufnahmehülse 101 an dem Einführstutzen 107 entlang, bis diese in Kontakt mit der zweiten abgeschrägten Einführkante 115-2 kommen.

Die zweite abgeschrägte Einführkante 115-2 presst gegen das Verriegelungselement 127, insbesondere gegen die erste, zweite und dritte Verriegelungskontur 133, 135, 137 des entsprechenden ersten und zweiten Verriegelungsarms 129-1, 129-2, bzw. des entsprechenden Bügelabschnitts 131, so dass der erste und zweite Verriegelungsarm 129-1, 129-2 und der Bügelabschnitt 131 weiter nach außen gebogen werden, und die erste, zweite und dritte Verriegelungskontur 133, 135, 137 des entsprechenden ersten und zweiten Verriegelungsarms 129-1, 129-2, bzw. des entsprechenden Bügelabschnitts 131 in die Nut 110 des Einführstutzens 107 eingreifen und der in Fig. 2 dargestellte Verriegelungszustand erreicht ist.

Während des zuvor beschriebenen Einführvorgangs stellen der erste und zweite Verriegelungsvorsprung 141, 143 des ersten und zweiten Verriegelungsarms 129-1, 129-2 sicher, dass bei einem Aufspreizen des Verriegelungselements 127 weiterhin ein wirksamer Kontakt zwischen dem Verriegelungselement 127 und der Aufnahmehülse 101 sichergestellt werden kann.

Hierbei wird zudem noch betont, dass der zuvor beschriebene Einführvorgang des Einführens des Einführstutzens 107 in die Aufnahmehülse 101 mit dem bereits an der Aufnahmehülse 101 vorab befestigten Verriegelungselement 127 nicht die einzige Möglichkeit der Verriegelung ist. Alternativ kann der Einführstutzen 107 auch direkt, d.h. ohne ein bereits an der Aufnahmehülse 101 angebrachtes Verriegelungselement 127, in die Aufnahmehülse 101 geschoben, und das Verriegelungselement 127 wird erst nach dem Einführen des Einführstutzens 107 an der Aufnahmehülse 101 angebracht.

Es wird ferner auf die vorangegangenen Ausführungen verwiesen.

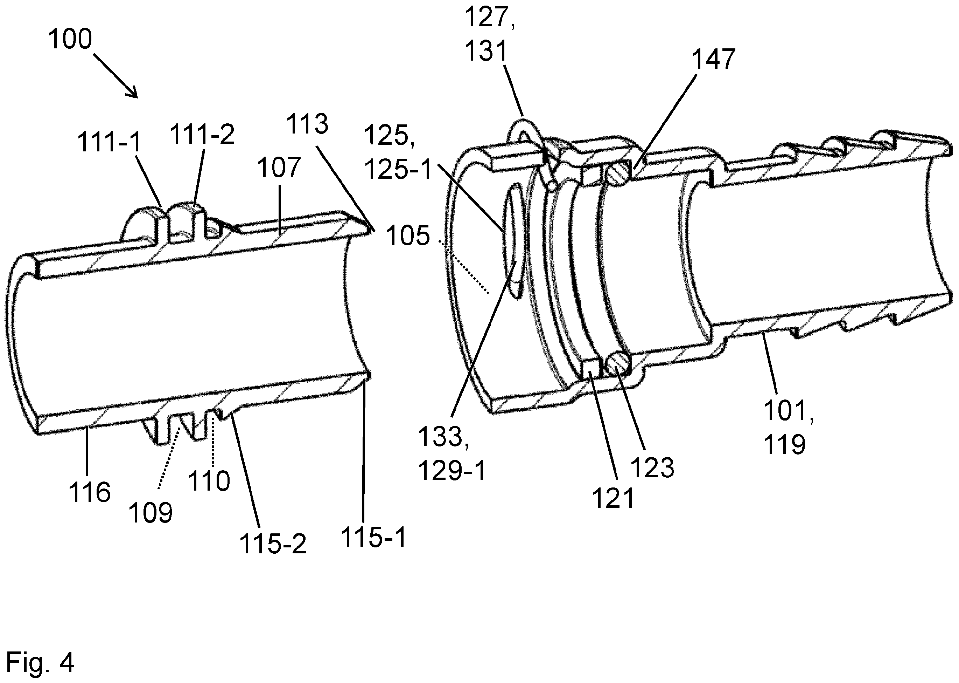

Fig. 4 zeigt eine weitere perspektivische Ansicht des in Fig. 3 dargestellten Verbindungselements.

Die in Fig. 4 gezeigte weitere perspektivische Ansicht zeigt das in Fig. 3 dargestellte Verbindungselement 100 in einer Schnittdarstellung.

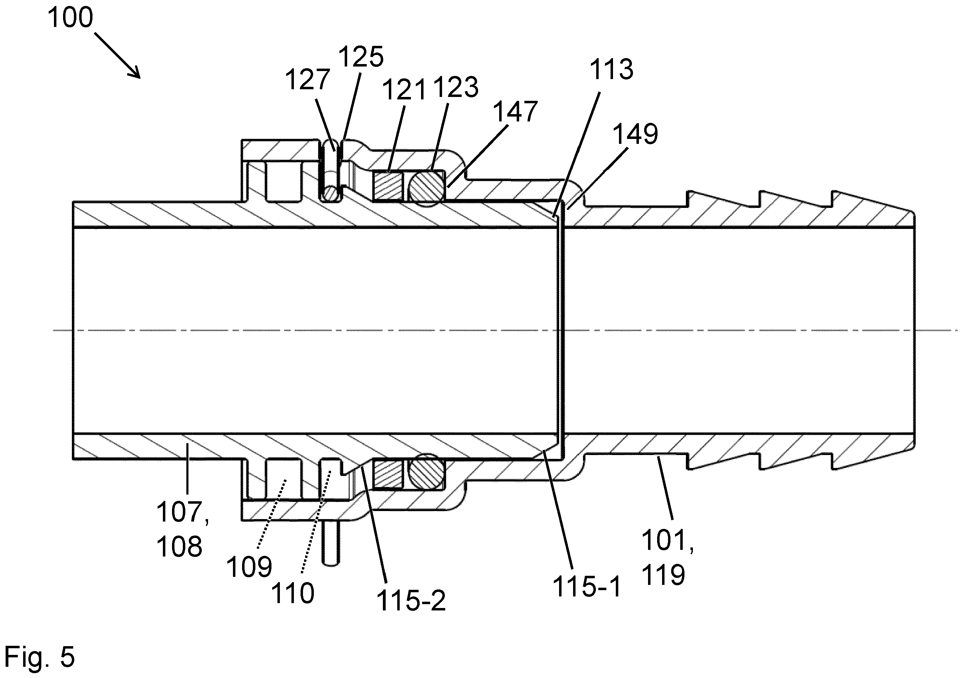

Im Gegensatz zu der in Fig. 3 gezeigten Darstellung kann in der Darstellung gemäß der Fig. 4 sowohl der Stabilisierungsring 121 als auch der Dichtungsring 123 des Verbindungselements 100 erkannt werden. Hierbei liegt der Dichtungsring 123 an einem ersten Anschlag 147 der Hülsenwandung 103 der Aufnahmehülse 101 an und liegt der Stabilisierungsring 121 an dem Dichtungsring 123 an. Beim Einschieben des Einführstutzens 107 in die Aufnahmehülse 101 wird der Einführstutzen 107 durch die Öffnung des Stabilisierungsrings 121 und durch die Öffnung des Dichtungsrings 123 geführt. Für weitere Details hierzu wird auf die nachfolgende Fig. 5 verwiesen.

Ferner wird auf die umfangreichen Ausführungen in Bezug auf die Fig. 1, 2 und 3 verwiesen.

Fig. 5 zeigt eine weitere perspektivische Ansicht des in Fig. 2 dargestellten Verbindungselements in dem verriegelten Zustand.

In der Fig. 5 kann das Eingreifen des Verriegelungselements 127 in die Nut 110 des Einführstutzens 107 vorteilhaft erkannt werden.

Zudem ist in der Fig. 5 zu erkennen, dass der Dichtungsring 123 an einem ersten Anschlag 147 der Hülsenwandung 103 der Aufnahmehülse 101 anliegt, und der Einführstutzen 107 über die zweite abgeschrägte Einführkante 115-2 an dem Stabilisierungsring 121 anliegt, welcher wiederum an dem Dichtungsring 123 anliegt, um eine fluiddichte Abdichtung sicherzustellen.

Zudem ist in der Fig. 5 zu erkennen, dass das Einführende 113 des Einführstutzens 107 an einem zweiten Anschlag 149 der Hülsenwandung 103 der Aufnahmehülse 101 anliegt, um eine Einführbewegung des Einführstutzens 107 in die Aufnahmehülse 101 zu begrenzen.

Für weitere Details wird auf die vorangegangenen Ausführungen verwiesen.

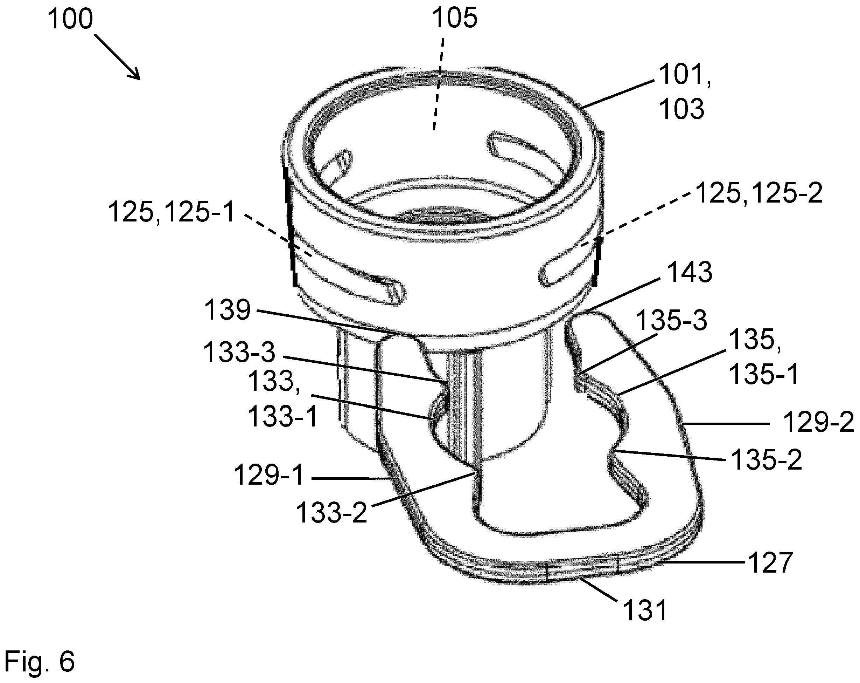

Fig. 6 zeigt eine perspektivische Ansicht eines Verbindungselements gemäß einer weiteren Ausführungsform.

In der in Fig. 6 dargestellten weiteren Ausführungsform ist lediglich die Aufnahmehülse 101 und das Verriegelungselement 127 des Verbindungselements 100 dargestellt, und nicht der Einführstutzen 107, und auch nicht das Stabilisierungselement 121 und auch nicht das Dichtungselement 123.

Für das Wechselspiel der einzelnen Bauteile der in der Fig. 6 dargestellten weiteren Ausführungsform des Verbindungselements 100 wird diesbezüglich auf die detaillierten vorangehenden Ausführungen in Bezug auf die in den Figuren 1 bis 5 dargestellte Ausführungsform des Verbindungselements 100 verwiesen.

In der in Fig. 6 dargestellten weiteren Ausführungsform des Verbindungselements 100 weist die Hülsenwandung 103 der Aufnahmehülse 101 im Gegensatz zu der in den Figuren 1 bis 5 dargestellten Ausführungsform des Verbindungselements 100 lediglich zwei Hülsenschlitze 125 auf, insbesondere umfassend einen ersten Hülsenschlitz 125-1 und einen dem ersten Hülsenschlitz 125-1 gegenüberliegenden zweiten Hülsenschlitz 125-2. In der in Fig. 6 dargestellten weiteren Ausführungsform des Verbindungselements 100 ist kein dritter Hülsenschlitz 125-3 zwischen dem ersten und zweiten Hülsenschlitz 125-1, 125-2 vorhanden.

In dem in Fig. 6 nicht dargestellten eingeführten Zustand des Einführstutzens 107 in die Aufnahmehülse 101 sind die beiden Hülsenschlitze 125, 125-1, 125-2 fluchtend zu der Nut 110 des Einführstutzens 107 angeordnet ist. Somit kann das in Fig. 6 dargestellte Verriegelungselement 127 durch die entsprechenden Hülsenschlitze 125, 125-1, 125-2, geführt werden, um den Einführstutzen 107 an der Aufnahmehülse 101 zu verriegeln.

Das in Fig. 6 dargestellte Verriegelungselement 127 besteht im Gegensatz zu dem in den Figuren 1 bis 5 dargestellten Verriegelungselement 127 nicht aus einem Metall, und ist auch nicht als eine gebogene metallische Feder geformt, sondern das in Fig. 6 dargestellte Verriegelungselement 127 besteht aus einem Kunststoff, und ist insbesondere als eine Kunststoffklammer geformt.

Ein aus einem Kunststoff, insbesondere als Kunststoffklammer, geformtes Verriegelungselement 127 gemäß der in Fig. 6 dargestellten Ausführungsform, weist eine ausreichende mechanische Stabilität auf, um den hohen Druckbelastungen widerstehen zu können, und ist zudem einfach und kostengünstig zu fertigen.

Das in Fig. 6 dargestellte Verriegelungselement 127 weist eine Mehrzahl von Verriegelungsarmen 129 auf, insbesondere einen ersten Verriegelungsarm 129-1 und einen dem ersten Verriegelungsarm 129 gegenüberliegenden zweiten Verriegelungsarm 129-2.

In dem in Fig. 6 nicht dargestellten eingeführten Zustand des Einführstutzens 107 greift der erste Verriegelungsarm 129-1 zumindest abschnittsweise in dem ersten Hülsenschlitz 125-1 und in die Nut 110 ein und greift der zweite Verriegelungsarm 129-2 zumindest abschnittsweise in den zweiten Hülsenschlitz 125-2 und in die Nut 110 ein, insbesondere an einander gegenüberliegenden Seiten der Nut 110, so dass das Verriegelungselement 127 den Einführstutzen 107 wirksam an der Aufnahmehülse 101 verriegelt.

Anlog zu dem in den Figuren 1 bis 5 dargestellten Verriegelungselement 127 weist auch das in Fig. 6 dargestellte Verriegelungselement 127 einen Bügelabschnitt 131 auf, welcher den ersten Verriegelungsarm 129-1 und den zweiten Verriegelungsarms 129-2 verbindet, wobei der erste und zweite Verriegelungsarm 129-1, 129-2 jeweils federelastisch mit dem Bügelabschnitt 131 verbunden sind, um ein Aufspreizen des ersten und zweiten Verriegelungsarms 129-1, 129-2 beim Einführen des Verriegelungselements 127 in die Aufnahmehülse 101 zu erreichen.

Somit können die Verriegelungsarme 129-1, 129-2 beim Einführen des Verriegelungselements 127 in die Hülsenschlitze 125, 125-1, 125-2 wirksam aufgespreizt werden, so dass nach dem Einführen des Verriegelungselements 127 die Verriegelungsarme 129-1, 129-2 mit einer Federkraft gegen den Einführstutzen 107 pressen, um eine stabile Verriegelung sicherzustellen.

Da die in der Fig. 6 dargestellte Aufnahmehülse 101 nicht drei, sondern lediglich zwei gegenüberliegende Hülsenschlitze 125, 125-1, 125-2 aufweist, weist der Bügelabschnitt 131 des Verriegelungselements 127 auch keine dritte Verriegelungskontur 137 auf.

Das in Fig. 6 dargestellte Verriegelungselements 127 weist einen ersten Verriegelungsarm 129-1 mit einer ersten Verriegelungskontur 133 und einen zweiten Verriegelungsarm 129-2 mit einer der ersten Verriegelungskontur 133 gegenüberliegenden zweiten Verriegelungskontur 135 auf.

Im eingeführten Zustand des Einführstutzens 107 beaufschlagen die erste und zweite Verriegelungskontur 133, 135 den Einführstutzen 107 von einander gegenüberliegenden Seiten mit einer Kraft, um den Einführstutzen 107 an der Aufnahmehülse 101 zu verriegeln.

Das in der Fig. 6 dargestellte Verriegelungselement 127 weist an den jeweiligen Armenden 139, 143 des jeweiligen Verriegelungsarms 129-1, 129-2 im Gegensatz zu dem in den Figuren 1 bis 5 dargestellten Verriegelungselement 127 keine Verriegelungsvorsprünge 141, 145 auf, welche ausgebildet sind, die Hülsenwandung 103 zu hintergreifen, um eine verliersichere Verriegelung des Verriegelungselements 127 an der Aufnahmehülse 101 sicherzustellen.

Stattdessen wird eine verliersichere Verriegelung des Verriegelungselements 127 an der Aufnahmehülse 101 gemäß dem in der Fig. 6 dargestellten Verriegelungselement 127 dadurch erreicht, dass die erste Verriegelungskontur 133 und die gegenüberliegende zweite Verriegelungskontur 135, jeweils einen gebogenen Konturabschnitt 133-1, 135-1 aufweisen, welcher jeweils durch einen ersten und zweiten Konturvorsprung 133-2, 133-3, 135-2, 135-3 begrenzt ist.

Die entsprechenden ersten Konturvorsprünge 133-2, 135-2 der ersten und zweiten Verriegelungskontur 133, 135 verhindern ein Herausgleiten der ersten und zweiten Verriegelungskontur 133, 135 in eine Richtung. Die entsprechenden zweiten Konturvorsprünge 133-3, 135-3 der ersten und zweiten Verriegelungskontur 133, 135 verhindern ein Herausgleiten der ersten und zweiten Verriegelungskontur 133, 135 in die andere Richtung.

Alle in Verbindung mit einzelnen Ausführungsformen der Erfindung erläuterten und gezeigten Merkmale können in unterschiedlicher Kombination in dem Gegenstand vorgesehen sein, um gleichzeitig deren vorteilhafte Wirkungen zu realisieren. Der Gegenstand der Erfindung ist jedoch durch die Ansprüche definiert.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Verbindungselement
- 101: Aufnahmehülse
- 103: Hülsenwandung
- 104: Erster Fluidkanal
- 105: Hülseninnenraum
- 106: Zweiter Fluidkanal
- 107: Einführstutzen
- 108: Stutzenwandung
- 109: Weitere Nut
- 110: Nut
- 111-1: Erster Flansch
- 111-2: Zweiter Flansch
- 113: Einführende
- 115-1: Erste abgeschrägte Einführkante
- 115-2: Zweite abgeschrägte Einführkante
- 116: Verbindungsabschnitt
- 117: Erster Hülsenabschnitt
- 119: Zweiter Hülsenabschnitt
- 121: Stabilisierungsring
- 123: Dichtungsring
- 125: Hülsenschlitze
- 125-1: Erster Hülsenschlitz
- 125-2: Zweiter Hülsenschlitz
- 125-3: Dritter Hülsenschlitz
- 127: Verriegelungselement
- 129-1: Erster Verriegelungsarm
- 129-2: Zweiter Verriegelungsarm
- 131: Bügelabschnitt
- 133: Erste Verriegelungskontur des ersten Verriegelungsarms
- 133-1: Gebogener Konturabschnitt der ersten Verriegelungskontur
- 133-2: Erster Konturvorsprung der ersten Verriegelungskontur
- 133-3: Zweiter Konturvorsprung der zweiten Verriegelungskontur
- 135: Zweite Verriegelungskontur des zweiten Verriegelungsarms
- 135-1: Gebogener Konturabschnitt der zweiten Verriegelungskontur
- 135-2: Erster Konturvorsprung der zweiten Verriegelungskontur
- 135-3: Zweiter Konturvorsprung der zweiten Verriegelungskontur
- 137: Dritte Verriegelungskontur des Bügelabschnitts
- 139: Erstes Armende des ersten Verriegelungsarms
- 141: Erster Verriegelungsvorsprung
- 143: Zweites Armende des zweiten Verriegelungsarms
- 145: Zweiter Verriegelungsvorsprung
- 147: Erster Anschlag
- 149: Zweiter Anschlag

## Patentansprüche

1. Verbindungselement (100) zum Herstellen einer Fluidverbindung mit zwei Fluidleitungen, mit:
einer Aufnahmehülse (101), welche mit einer ersten Fluidleitung fluidtechnisch verbindbar ist, wobei die Aufnahmehülse (101) eine Hülsenwandung (103) aufweist, welche einen Hülseninnenraum (105) begrenzt, wobei in der Hülsenwandung (103) eine Mehrzahl von Hülsenschlitzen (125, 125-1, 125-2, 125-3) geformt ist,
einem Einführstutzen (107), welcher mit einer zweiten Fluidleitung fluidtechnisch verbindbar ist, wobei der Einführstutzen (107) in den Hülseninnenraum (105) der Aufnahmehülse (101) einführbar ist, um die Fluidverbindung bereitzustellen, wobei der Einführstutzen (107) eine Stutzenwandung (108) aufweist, an welcher eine den Einführstutzen (107) zumindest abschnittsweise umlaufende Nut (110) geformt ist,
wobei im eingeführten Zustand des Einführstutzens (107) in die Aufnahmehülse (101) die Mehrzahl von Hülsenschlitzen (125, 125-1, 125-2, 125-3) der Aufnahmehülse(101) fluchtend zu der Nut (110) des Einführstutzens (107) angeordnet ist, und
einem Verriegelungselement (127) zum Verriegeln des Einführstutzens (107) an der Aufnahmehülse (101), wobei das Verriegelungselement (127) eine Mehrzahl von Verriegelungsarmen (129, 129-1, 129-2) aufweist, wobei im eingeführten Zustand des Einführstutzens (107) in die Aufnahmehülse (101) die Verriegelungsarme (129, 129-1, 129-2) jeweils in einen Hülsenschlitz (125, 125-1, 125-2, 125-3) der Mehrzahl von Hülsenschlitzen (125, 125-1, 125-2, 125-3) und in die Nut (110) eingreifen, um den Einführstutzen (107) an der Aufnahmehülse (101) zu verriegeln,
wobei der Einführstutzen (107) und/oder die Aufnahmehülse (101) zumindest abschnittweise aus Polyphthalamid (PPA) oder Polyphenylensulfid (PPS) geformt ist,
wobei die Mehrzahl von Verriegelungsarmen (129, 129-1, 129-2) an einem Armende (139, 143) jeweils einen Verriegelungsvorsprung (141, 145) aufweist, welcher ausgebildet ist, die Hülsenwandung (103) zu hintergreifen, um eine verliersichere Verriegelung des Verriegelungselements (127) an der Aufnahmehülse (101) sicherzustellen, und
wobei der Einführstutzen (107) einen den Einführstutzen (107) umlaufenden ersten Flansch (111-2) und eine den Einführstutzen (107) umlaufende erste abgeschrägte Einführkante (115-2) aufweist, wobei der erste Flansch (111-2) und die erste abgeschrägte Einführkante (115-2) die Nut (110) zum Eingreifen des Verriegelungselements (127) begrenzen,
wobei die Mehrzahl von Hülsenschlitzen (125, 125-1, 125-2, 125-3) der Aufnahmehülse (101) einen ersten Hülsenschlitz (125-1) und einen dem ersten Hülsenschlitz (125-1) gegenüberliegenden zweiten Hülsenschlitz (125-2) aufweisen, wobei die Mehrzahl von Verriegelungsarmen (129, 129-1, 129-2) des Verriegelungselements (127) einen ersten Verriegelungsarm (129-1) und einen dem ersten Verriegelungsarm (129-1) gegenüberliegenden zweiten Verriegelungsarm (129-2) aufweist, wobei der erste Verriegelungsarm (129-1) in den ersten Hülsenschlitz (125-1) und in die Nut (110) des Einführstutzens (107) eingreift, und wobei der zweite Verriegelungsarm (129-2) in den zweiten Hülsenschlitz (125-2) und in die Nut (110) des Einführstutzens (107) eingreift, um den Einführstutzen (107) an der Aufnahmehülse (101) zu verriegeln, und
wobei das Verriegelungselement (127) einen Bügelabschnitt (131) aufweist, welcher den ersten Verriegelungsarm (129-1) mit dem zweiten Verriegelungsarm (129-2) verbindet, wobei der erste und zweite Verriegelungsarm (129-1, 129-2) jeweils federelastisch mit dem Bügelabschnitt (131) verbunden sind, um ein Aufspreizen des ersten und zweiten Verriegelungsarms (129-1, 129-2) beim Einführen des Verriegelungselements (127) in die Aufnahmehülse (101) zu erreichen.

2. Verbindungselement (100) nach Anspruch 1, wobei die Aufnahmehülse (101) einen dritten Hülsenschlitz (125-3) aufweist, welcher zwischen dem ersten und zweiten Hülsenschlitz (125-1, 125-2) angeordnet ist, und wobei der Bügelabschnitt (131) zumindest abschnittsweise in den dritten Hülsenschlitz (125-3) und in die Nut (110) des Einführstutzens (107) eingreift, um den Einführstutzen (107) an der Aufnahmehülse (101) zu verriegeln.

3. Verbindungselement (100) nach Anspruch 1 oder 2, wobei die Mehrzahl von Verriegelungsarmen (129, 129-1, 129-2) jeweils eine Verriegelungskontur (133, 135) aufweist, welche in den jeweiligen Hülsenschlitz (125, 125-1, 125-2, 125-3) und in die Nut (110) eingreifen, wobei im eingeführten Zustand des Einführstutzens (107) die Verriegelungskonturen (133, 135) den Einführstutzen (107) mit einer Kraft beaufschlagen, um den Einführstutzen (107) in der Aufnahmehülse (101) zu verriegeln.

4. Verbindungselement (100) nach einem der vorangehenden Ansprüche, umfassend ein Dichtungselement (123), welches in dem Hülseninnenraum (105) der Aufnahmehülse (101) aufgenommen ist und an einem ersten Anschlag (147) der Hülsenwandung (103) der Aufnahmehülse (101) anliegt, wobei insbesondere der in der Aufnahmehülse (101) aufgenommene Einführstutzen (107) gegen das Dichtungselement (123) anpressbar ist, um das Dichtungselement (123) gegen den ersten Anschlag (147) der Hülsenwandung (103) zu pressen, um eine fluiddichte Abdichtung sicherzustellen.

5. Verbindungselement (100) nach Anspruch 4, umfassend ein Stabilisierungselement (121), welches in dem Hülseninnenraum (105) der Aufnahmehülse (101) aufgenommen ist und an dem Dichtungselement (123) anliegt, wobei insbesondere der in der Aufnahmehülse (101) aufgenommene Einführstutzen (107) gegen das Stabilisierungselement (121) anpressbar ist, welches wiederum gegen das Dichtungselement (123) anpressbar ist, um das Dichtungselement (123) gegen den ersten Anschlag (147) der Hülsenwandung (103) zu pressen, um eine fluiddichte Abdichtung sicherzustellen.

6. Verbindungselement (100) nach einem der vorangehenden Ansprüche, wobei der Einführstutzen (107) einen den Einführstutzen (107) umlaufenden weiteren Flansch (111-1) aufweist, wobei der erste und weitere Flansch (111-1, 111-2) insbesondere eine weitere Nut (109) zur Aufnahme eines weiteren Dichtungselements begrenzen.

7. Verbindungselement (100) nach einem der vorangehenden Ansprüche, wobei an einem Einführende (113) des Einführstutzens (107) eine den Einführstutzen (107) umlaufende weitere abgeschrägte Einführkante (115-1) angeordnet ist, um ein Einführen des Einführstutzens (107) in die Aufnahmehülse (101) zu erleichtern.

8. Verbindungselement (100) nach einem der vorangehenden Ansprüche, wobei die Aufnahmehülse (101) einen zweiten Anschlag (149) aufweist, an welchem der in die Aufnahmehülse (101) eingeführte Einführstutzen (107) anliegt, um die Einführung des Einführstutzens (107) zu begrenzen.

9. Verbindungselement (100) nach einem der vorangehenden Ansprüche, wobei die Aufnahmehülse (101) einen ersten Hülsenabschnitt (117) zur Aufnahme des Einführstutzens (107) und einen sich an den ersten Hülsenabschnitt (117) anschließenden zweiten Hülsenabschnitt (119) aufweist, wobei insbesondere der zweite Hülsenabschnitt (119) an einer Außenseite eine Verbindungskontur zum Aufstecken der ersten Fluidleitung aufweist.

10. Verbindungselement (100) nach einem der vorangehenden Ansprüche, wobei das Verriegelungselement (127) aus einem Metall besteht, und insbesondere als ein gebogene metallische Feder geformt ist, oder wobei das Verriegelungselement (127) aus einem Kunststoff besteht, und insbesondere als eine Kunststoffklammer geformt ist.

11. Fluidverbindungsanordnung (100), umfassend ein Verbindungselement (100) nach einem der vorangehenden Ansprüche, eine erste Fluidleitung und eine zweite Fluidleitung,
wobei ein erstes Leitungsende der ersten Fluidleitung mit der Aufnahmehülse (101) verbunden ist, und wobei ein zweites Leitungsende der zweiten Fluidleitung mit dem Einführstutzen (107) verbunden ist.

## Claims

1. Connecting element (100) for establishing a fluid connection with two fluid lines, comprising:
a receiving sleeve (101), which is connectable to a first fluid line in a fluid-technical manner, wherein the receiving sleeve (101) comprises a sleeve wall (103), which delimits a sleeve interior (105), wherein a plurality of sleeve slots (125, 125-1, 125-2, 125-3) is formed in the sleeve wall (103),
an insertion nozzle (107), which is connectable to a second fluid line in a fluid-technical manner, wherein the insertion nozzle (107) is insertable into the sleeve interior (105) of the receiving sleeve (101) in order to provide the fluid connection, wherein the insertion nozzle (107) comprises a nozzle wall (108), at which a groove (110) is formed, which surrounds the insertion nozzle (107) at least partially,
wherein in the inserted state of the insertion nozzle (107) into the receiving sleeve (101), the plurality of sleeve slots (125, 125-1, 125-2, 125-3) of the receiving sleeve (101) are arranged in alignment with the groove (110) of the insertion nozzle (107), and
a locking element (127) for locking the insertion nozzle (107) at the receiving sleeve (101), wherein the locking element (127) comprises a plurality of locking arms (129, 129-1, 129-2), wherein in the inserted state of the insertion nozzle (107) into the receiving sleeve (101), the locking arms (129, 129-1, 129-2) each engage in a sleeve slot (125, 125-1, 125-2, 125-3) of the plurality of sleeve slots (125, 125-1, 125-2, 125-3) and in the groove (110) in order to lock the insertion nozzle (107) at the receiving sleeve (101),
wherein the insertion nozzle (107) and/or the receiving sleeve (101) is formed at least partially from polyphthalamide (PPA) or polyphenylene sulfide (PPS),
wherein at one arm end (139, 143), the plurality of locking arms (129, 129-1, 129-2) each comprise a locking projection (141, 145), which is adapted to engage behind the sleeve wall (103) in order to ensure a captive locking of the locking element (127) at the receiving sleeve (101), and
wherein the insertion nozzle (107) comprises a first flange (111-2) surrounding the insertion nozzle (107) and a first beveled insertion edge (115-2) surrounding the insertion nozzle (107), wherein the first flange (111-2) and the first beveled insertion edge (115-2) delimit the groove (110) for engagement of the locking element (127),
wherein the plurality of sleeve slots (125, 125-1, 125-2, 125-3) of the receiving sleeve (101) comprise a first sleeve slot (125-1) and a second sleeve slot (125-2) opposite the first sleeve slot (125-1), wherein the plurality of locking arms (129, 129-1, 129-2) of the locking element (127) comprise a first locking arm (129-1) and a second locking arm (129-2) opposite the first locking arm (129-1), wherein the first locking arm (129-1) engages in the first sleeve slot (125-1) and in the groove (110) of the insertion nozzle (107), and wherein the second locking arm (129-2) engages in the second sleeve slot (125-2) and engages in the groove (110) of the insertion nozzle (107) in order to lock the insertion nozzle (107) at the receiving sleeve (101), and
wherein the locking element (127) comprises a bracket section (131), which connects the first locking arm (129-1) to the second locking arm (129-2), wherein the first and second locking arms (129-1, 129-2) are each connected to the bracket section (131) in a spring elastic manner in order to achieve spreading of the first and second locking arms (129-1, 129-2) when the locking element (127) is inserted into the receiving sleeve (101).

2. Connecting element (100) according to claim 1, wherein the receiving sleeve (101) comprises a third sleeve slot (125-3), which is arranged between the first and second sleeve slots (125-1, 125-2), and wherein the bracket section (131) engages at least partially in the third sleeve slot (125-3) and in the groove (110) of the insertion nozzle (107) in order to lock the insertion nozzle (107) at the receiving sleeve (101).

3. Connecting element (100) according to claim 1 or 2, wherein the plurality of locking arms (129, 129-1, 129-2) each comprise a locking contour (133, 135), which engage in the respective sleeve slot (125, 125-1, 125-2, 125-3) and in the groove (110), wherein in the inserted state of the insertion nozzle (107), the locking contours (133, 135) apply a force to the insertion nozzle (107) in order to lock the insertion nozzle (107) at the receiving sleeve (101).

4. Connecting element (100) according to one of the preceding claims, comprising a sealing element (123), which is received in the sleeve interior (105) of the receiving sleeve (101) and abuts at a first stop (147) of the sleeve wall (103) of the receiving sleeve (101), wherein in particular the insertion nozzle (107) received in the receiving sleeve (101) is pressable against the sealing element (123) in order to press the sealing element (123) against the first stop (147) of the sleeve wall (103) in order to ensure a fluid-tight seal.

5. Connecting element (100) according to claim 4, comprising a stabilizing element (121), which is received in the sleeve interior (105) of the receiving sleeve (101) and abuts at the sealing element (123), wherein in particular the insertion nozzle (107) received in the receiving sleeve (101) is pressable against the stabilizing element (121), which in turn is pressable against the sealing element (123) in order to press the sealing element (123) against the first stop (147) of the sleeve wall (103) in order to ensure a fluid-tight seal.

6. Connecting element (100) according to one of the preceding claims, wherein the insertion nozzle (107) comprises a further flange (111-1) surrounding the insertion nozzle (107), wherein the first and further flanges (111-1, 111-2) in particular delimit a further groove (109) for receiving a further sealing element.

7. Connecting element (100) according to one of the preceding claims, wherein a further beveled insertion edge (115-1) is arranged at an insertion end (113) of the insertion nozzle (107) surrounding the insertion nozzle (107) in order to facilitate insertion of the insertion nozzle (107) into the receiving sleeve (101).

8. Connecting element (100) according to one of the preceding claims, wherein the receiving sleeve (101) comprises a second stop (149), at which the insertion nozzle (107) inserted into the receiving sleeve (101) abuts in order to delimit the insertion of the insertion nozzle (107).

9. Connecting element (100) according to one of the preceding claims, wherein the receiving sleeve (101) comprises a first sleeve section (117) for receiving the insertion nozzle (107) and a second sleeve section (119) adjoining the first sleeve section (117), wherein in particular the second sleeve section (119) comprises a connecting contour at an outer side for plugging on the first fluid line.

10. Connecting element (100) according to one of the preceding claims, wherein the locking element (127) is made of a metal, and in particular is shaped as a bent metallic spring, or wherein the locking element (127) is made of a plastic, and in particular is shaped as a plastic clip.

11. Fluid connection arrangement (100), comprising a connecting element (100) according to one of the preceding claims, a first fluid line and a second fluid line,
wherein a first line end of the first fluid line is connected to the receiving sleeve (101), and wherein a second line end of the second fluid line is connected to the insertion nozzle (107).

## Revendications

1. Élément de connexion (100) pour établir une connexion fluidique avec deux conduites de fluide, comprenant :
un manchon de réception (101) pouvant être raccordé à une première conduite de fluide par voie fluidique, ledit manchon de réception (101) comprenant une paroi (103) délimitant un espace intérieur (105) du manchon, plusieurs fentes (125, 125-1, 125-2, 125-3) étant formées dans la paroi (103) du manchon,
une buse d'insertion (107) pouvant être raccordée à une seconde conduite de fluide par voie fluidique, la buse d'insertion (107) étant insérable à l'intérieur du manchon (105) du manchon de réception (101) afin d'assurer la connexion fluidique. La buse d'insertion (107) comprend une paroi de buse (108) au niveau de laquelle est formée une rainure (110) qui entoure la buse d'insertion (107) au moins par sections,
dans lequel, dans l'état inséré de la buse d'insertion (107) dans le manchon de réception (101), la pluralité de fentes de manchon (125, 125-1, 125-2, 125-3) du manchon de réception (101) sont disposées en alignement avec la rainure (110) de la buse d'insertion (107), et
un élément de verrouillage (127) pour verrouiller la buse d'insertion (107) sur le manchon de réception (101), l'élément de verrouillage (127) comprenant une pluralité de bras de verrouillage (129, 129-1, 129-2), lorsque la buse d'insertion (107) est insérée dans le manchon de réception (101), les bras de verrouillage (129, 129-1, 129-2) s'engagent chacun dans une fente (125, 125-1, 125-2, 125-3) du manchon et dans la rainure (110) afin de verrouiller la buse d'insertion (107) sur le manchon de réception (101),
dans lequel la buse d'insertion (107) et/ou le manchon de réception (101) sont formés au moins par sections de polyphtalamide (PPA) ou de sulfure de polyphénylène (PPS),
dans lequel, à une extrémité du bras (139, 143), la pluralité de bras de verrouillage (129, 129-1, 129-2) comprennent chacun une saillie de verrouillage (141, 145), qui est adaptée pour s'engager derrière la paroi du manchon (103) afin d'assurer un verrouillage captif de l'élément de verrouillage (127) au niveau du manchon de réception (101), et
dans laquelle la buse d'insertion (107) comprend une première bride (111-2) entourant la buse d'insertion (107) et un premier bord d'insertion biseauté (115-2) entourant la buse d'insertion (107), dans laquelle la première bride (111-2) et le premier bord d'insertion biseauté (115-2) limitent la rainure (110) pour l'engagement de l'élément de verrouillage (127),
dans lequel la pluralité de fentes de manchon (125, 125-1, 125-2, 125-3) du manchon de réception (101) comprend une première fente de manchon (125-1) et une seconde fente de manchon (125-2) opposée à la première fente de manchon (125-1), dans lequel la pluralité de bras de verrouillage (129, 129-1, 129-2) de l'élément de verrouillage (127) comprend un premier bras de verrouillage (129-1) et un second bras de verrouillage (129-2) opposé au premier bras de verrouillage (129-1), le premier bras de verrouillage (129-1) s'engage dans la première fente de manchon (125-1) et dans la rainure (110) de la buse d'insertion (107), le second bras de verrouillage (129-2) s'engage dans la seconde fente de manchon (125-2) et dans la rainure (110) de la buse d'insertion (107) afin pour verrouiller la buse d'insertion (107) au niveau du manchon de réception (101), et
dans lequel l'élément de verrouillage (127) comprend une section de support (131), qui relie le premier bras de verrouillage (129-1) au deuxième bras de verrouillage (129-2), dans lequel les premier et deuxième bras de verrouillage (129-1, 129-2) sont chacun reliés à la section de support (131) d'une manière élastique à ressort afin d'obtenir l'écartement des premier et deuxième bras de verrouillage (129-1, 129-2) lorsque l'élément de verrouillage (127) est inséré dans le manchon de réception (101).

2. Élément de connexion (100) selon la revendication 1, dans lequel le manchon de réception (101) comprend une troisième fente de manchon (125-3), qui est disposée entre les première et deuxième fentes de manchon (125-1, 125-2), et dans lequel la section de support (131) s'engage au moins par sections dans la troisième fente de manchon (125-3) et dans la rainure (110) de la buse d'insertion (107) afin de verrouiller la buse d'insertion (107) au manchon de réception (101).

3. Élément de connexion (100) selon la revendication 1 ou 2, dans lequel la pluralité de bras de verrouillage (129, 129-1, 129-2) comprennent chacun un contour de verrouillage (133, 135), qui s'engage dans la fente de manchon respective (125, 125-1, 125-2, 125-3) et dans la rainure (110), dans lequel, dans l'état inséré de la buse d'insertion (107), les contours de verrouillage (133, 135) appliquent une force sur la buse d'insertion (107) afin de verrouiller la buse d'insertion (107) au niveau du manchon de réception (101).

4. Élément de connexion (100) selon l'une des revendications précédentes, comprenant un élément d'étanchéité (123) qui est reçu dans l'intérieur du manchon (105) du manchon de réception (101) et qui vient en butée contre une première butée (147) de la paroi du manchon (103) du manchon de réception (101), la buse d'insertion (107) reçue dans le manchon de réception (101) pouvant notamment être pressée contre l'élément d'étanchéité (123) afin de presser l'élément d'étanchéité (123) contre la première butée (147) de la paroi du manchon (103) pour assurer une étanchéité aux fluides.

5. Élément de connexion (100) selon la revendication 4, comprenant un élément de stabilisation (121) logé dans l'espace intérieur (105) du manchon de réception (101) et venant en butée contre l'élément d'étanchéité (123), la buse d'insertion (107) logée dans le manchon de réception (101) pouvant notamment être pressée contre l'élément de stabilisation (121), lequel peut à son tour être pressé contre l'élément d'étanchéité (123) afin de presser l'élément d'étanchéité (123) contre la première butée (147) de la paroi du manchon (103) pour assurer une étanchéité aux fluides.

6. Élément de connexion (100) selon l'une des revendications précédentes, dans lequel la buse d'insertion (107) comprend une autre bride (111-1) entourant la buse d'insertion (107), la première et les autres brides (111-1, 111-2) délimitant en particulier une autre rainure (109) destinée à recevoir un autre élément d'étanchéité.

7. Élément de connexion (100) selon l'une des revendications précédentes, dans lequel un autre bord d'insertion biseauté (115-1) est disposé à une extrémité d'insertion (113) de la buse d'insertion (107) entourant la buse d'insertion (107) afin de faciliter l'insertion de la buse d'insertion (107) dans le manchon de réception (101).

8. Élément de connexion (100) selon l'une des revendications précédentes, dans lequel le manchon de réception (101) comprend une deuxième butée (149), au niveau de laquelle la buse d'insertion (107) insérée dans le manchon de réception (101) vient en butée afin de limiter l'insertion de la buse d'insertion (107).

9. Élément de connexion (100) selon l'une des revendications précédentes, dans lequel le manchon de réception (101) comprend une première section de manchon (117) destinée à recevoir la buse d'insertion (107) et une seconde section de manchon (119) adjacente à la première section de manchon (117), la seconde section de manchon (119) comprenant en particulier un contour de raccordement sur un côté extérieur destiné à être branché sur la première conduite de fluide.

10. Élément de connexion (100) selon l'une des revendications précédentes, dans lequel l'élément de verrouillage (127) est réalisé en métal, et en particulier est réalisé sous la forme d'un ressort métallique courbé, ou dans lequel l'élément de verrouillage (127) est réalisé en matière plastique, et en particulier est réalisé sous la forme d'un clip en matière plastique.

11. Dispositif de connexion de fluide (100), comprenant un élément de connexion (100) selon l'une des revendications précédentes, une première conduite de fluide et une seconde conduite de fluide,
dans lequel une première extrémité de ligne de la première ligne de fluide est connectée au manchon de réception (101), et dans lequel une seconde extrémité de ligne de la seconde ligne de fluide est connectée à la buse d'insertion (107).
